(19) Europäisches Patentamt
European Patent Office
Office européen des brevets

(11) Numéro de publication : **0 112 764**
**B1**

(12) **FASCICULE DE BREVET EUROPÉEN**

(45) Date de publication du fascicule du brevet : **11.02.87**

(51) Int. Cl.[4] : **C 22 B 3/00**, C 22 B 19/26, C 01 G 49/06

(21) Numéro de dépôt : **83402415.0**

(22) Date de dépôt : **14.12.83**

(54) **Procédé d'élimination du fer de solutions de lixiviation.**

(30) Priorité : **21.12.82 FR 8221392**

(43) Date de publication de la demande : **04.07.84 Bulletin 84/27**

(45) Mention de la délivrance du brevet : **11.02.87 Bulletin 87/07**

(84) Etats contractants désignés : **AT BE CH DE FR GB IT LI LU NL SE**

(56) Documents cités :
**FR-A- 2 440 917**
**US-A- 4 288 304**
**US-A- 4 378 275**
**METALLURGICAL TRANSACTIONS, vol. 10B, no. 1, mars 1979, pages 49-56, The American Society For Metals And The Metallurgical Society Of Aime, US, F. HABASHI et al.: "Aqueous oxidation of chalcopyrite in hydrochloric acid"**

(73) Titulaire : **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cedex 07 (FR)**

(72) Inventeur : **Dumas, Jean Louis**
**La Ripaillère**
**F-38000 Saint-Martin-Le-Venoux (FR)**
Inventeur : **Torre, Yves**
**1, rue Lakanal**
**F-38000 Grenoble (FR)**

(74) Mandataire : **Maurette, Hélène et al**
**L'Air Liquide Société Anonyme pour l'Etude et l'Exploitation des Procédés Georges Claude 75, quai d'Orsay**
**F-75321 Paris Cedex 07 (FR)**

**EP 0 112 764 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention a pour objet un procédé d'élimination sélective du fer de solutions acides chlorées provenant de la lixiviation de minerais sulfurés complexes en vue de la production de métaux non ferreux, notamment de solutions provenant de l'attaque hydrométallurgique du zinc.

On sait que le traitement des minerais sulfurés complexes en vue de la production de métaux non ferreux tels que le cuivre, le plomb, le zinc, le cobalt, le nickel, l'argent, etc, consiste à leur faire subir une attaque hydrométallurgique par lessivage à l'aide d'une solution d'attaque sulfurique ou chlorhydrique acide, en milieu plus ou moins oxydant. Les différents composants des minerais sulfurés de départ se trouvent alors solubilisés dans la solution de lixiviation ainsi obtenue, et le problème est alors de les extraire séparément de ladite solution. Or, les minerais sulfurés de départ contiennent toujours un peu de fer sous forme de sulfures (pyrite, pyrothite, chalcopyrite) ; ce fer est, lui aussi, plus ou moins solubilisé au cours des traitements de lixiviation sous la forme $Fe^{++}$ et $Fe^{+++}$ (la plus grande partie sous la forme $Fe^{++}$) et il constitue une impureté gênante lors de l'extraction ultérieure, soit par électrolyse, soit à l'aide d'un solvant sélectif, des éléments intéressants de ladite solution, ainsi que pour le recyclage de la solution d'attaque.

Il est donc indispensable d'éliminer le fer des solutions acides issues de la lixiviation des minerais en vue de la production de métaux non ferreux et d'effectuer cette élimination de façon sélective pour ne pas entraîner les autres espèces présentes dans ces solutions.

Ce problème se pose plus particulièrement pour les solutions de lixiviation provenant de l'hydrométallurgie du zinc. On rappelle que le traitement des minerais de zinc consiste à effectuer, avant l'attaque acide, un grillage oxydant préalable de la blende ZnS selon lequel on obtient de la calcine qui est un mélange de sulfate de zinc $ZnSO_4$, oxyde de zinc ZnO, sulfure de zinc ZnS, et de ferrite de zinc $ZnFeO_4$. Lors de la lixiviation de cette calcine, on obtient donc de grandes quantités de fer en solution ; c'est donc, dans la production du zinc par hydrométallurgie, que le fer est le plus gênant.

De la façon la plus générale, les procédés actuels pour éliminer le fer de solutions de lixiviation s'effectuent sur des solutions provenant d'une attaque hydrométallurgique en milieu sulfurique ; selon ces procédés, on tente d'éliminer le fer en oxydant préalablement le fer ferreux en fer ferrique puis en précipitant ce fer ferrique à l'état d'hydroxyde sous forme d'un précipité cristallin facile à filtrer. L'une des préoccupations essentielles, lors de la mise en œuvre de ces procédés, est d'éviter la précipitation du fer ferrique sous forme de gels amorphes de la forme $Fe(OH)_n$ — $Fe(OH)_n$ qui sont difficiles, voire impossibles à filtrer. L'apparition de ces gels amorphes est due, en général, à une vitesse d'oxydation trop rapide de la solution entraînant une accumulation d'ions ferriques ; ces ions $Fe^{+++}$ en solution forment alors des ions $[FeOH]^{++}$ qui réagissent entre eux pour produire les polymères colloïdaux $Fe(OH)_n$ — $Fe(OH)_n$.

L'un de ces procédés est le procédé dit « à la jarosite », décrit notamment dans le brevet américain n° 3 493 365. Ce procédé consiste à traiter la solution de lixiviation par un agent basique en présence d'oxygène pour oxyder le fer ferreux en fer ferrique ; on obtient un précipité, la jarosite, qui est un sel de sulfate basique du type $(M)Fe_3(SO_4)_2(OH)_6$ ou $(M)Fe(SO_4)_2$ — $2Fe(OH)_3$ (M pouvant être un cation $NH_4^+$, $Na^+$, $H_3O^+$, etc... mais étant le plus souvent $NH_4$), dans lequel le pourcentage de fer est d'environ 25 %. Le principal inconvénient de ce procédé est de nécessiter l'utilisation de réactifs coûteux ; de plus, il entraîne un stockage énorme de résidus par rapport au zinc produit (50 000 tonnes par an de jarosite pour 100 000 tonnes par an de zinc) ; par ailleurs, il entraîne la consommation de calcine) donc une perte non négligeable en zinc) pour neutraliser l'acide sulfurique formé lors de la réaction.

Un autre de ces procédés est le procédé dit « à la goéthite », décrit notamment dans le brevet belge n° 724 214. Ce procédé consiste à effectuer une oxydation lente en présence de calcine et à pH rigoureusement contrôlé de façon à maintenir, tout au long de la précipitation, une faible teneur en fer ferrique dans la solution. On obtient ainsi un précipité, la goéthite, dans lequel le fer est sous forme d'un hydroxyde ferrique du type $\alpha$ FeOOH ou (1/2) $(Fe_2O_3 \cdot H_2O)$ qui contient environ 40 % de fer. Ce procédé présente plusieurs inconvénients, à savoir : la perte d'une certaine quantité de zinc compte tenu de l'utilisation de calcine, les difficultés inhérentes à un contrôle de pH délicat, et également la coprécipitation d'un grand nombre d'éléments indésirables tels que l'arsenic, l'antimoine, le germanium, le bismuth, qui posent des problèmes autant pour le stockage du précipité que pour une valorisation éventuelle de ce dernier.

Un autre de ces procédés, plus récent, est le procédé dit « à l'hématite », décrit notamment dans l'« AIME-TMS, paper selection » n° A 73-65. Ce procédé consiste à traiter directement la solution de lixiviation des résidus d'une première attaque douce, par de l'oxygène à haute pression (20 bars) et à haute température (200 °C). Il donne des résultats satisfaisants : on obtient, en effet, directement un précipité cristallin de $F_2O_3$ qui contient environ 60 % de fer. Mais ce procédé présente l'inconvénient de faire intervenir des pressions, des températures et des teneurs élevées en acide sulfurique, nécessitant l'emploi d'une enceinte réactionnelle très résistante à la corrosion, donc élaborée à partir de matériaux coûteux tels que le titane.

Depuis quelques années, on commence à envisager d'effectuer l'attaque hydrométallurgique des minerais sulfurés complexes en milieu chlorhydrique, compte tenu du fort pouvoir complexant des

chlorures (par exemple complexes de plomb $PbCl_3^-$, $PbCl_4^{--}$, d'argent $AgCl_2^-$, $AgCl_3^{--}$ solubles). Il n'existe toutefois pas encore de procédés industriels d'élimination du fer des solutions de lixiviation en milieu chloré ainsi formées. Toutefois, des études ont été faites à ce sujet et l'on peut citer notamment l'article de Demarthe, Gaudon et Georgeaux « A new hydrometallurgical process for copper » publié en 1976 lors de l'« Aime international symposium on copper », dans le volume n° II, chapitre 43 de « in extractive metallurgy of copper ».

L'article de F. Nabashi et al. de la revue « Metallurgical Transactions » — vol. 10B, numéro 1, mars 1979, pages 49 à 56, décrit, plus spécifiquement aux pages 51 et 52, l'oxydation aqueuse de la chalcopyrite à l'aide d'acide chlorhydrique. Cette oxydation se rapporte donc à l'étape de lixiviation proprement dite, c'est-à-dire à la dissolution du fer et du cuivre dans la solution d'acide chlorhydrique et non à l'élimination du fer de la solution de lixiviation.

Le procédé, objet de la présente invention, permet d'obtenir, à partir de solutions de lixiviation provenant d'attaques hydrométallurgiques à l'aide de composés chlorés tel que le chlorure ferrique, le chlorure cuivrique, l'acide chlorhydrique, etc... en présence ou non d'oxygène, une précipitation du fer plus ou moins totale selon le degré d'épuration souhaité et un précipité de ce fer facilement filtrable et lavable, qui est, de plus, valorisable ultérieurement en tant que matière première pour la métallurgie du fer.

Le procédé considéré consiste à oxyder en fer ferrique le fer ferreux présent dans la solution de lixiviation par introduction d'un gaz oxydant dans ladite solution, le fer ferrique s'hydrolysant et précipitant à l'état d'hydroxyde ferrique dans des conditions de pH relativement acides (le pH des solutions de lixiviation chlorées est en général inférieur à 2,5), puis à filtrer et laver le précipité de fer ferrique ainsi formé. Il se caractérise en ce que la solution de départ a une concentration en cuivre $[Cu^{++}] \leqslant 1,5$ M et une concentration en fer ferreux $[Fe^{++}] \leqslant 2$ M, et en ce que l'on introduit ledit gaz oxydant dans ladite solution, à débit constant pendant au moins la première moitié de la durée de la réaction et on augmente, de façon continue, en fonction du temps la pression partielle de l'oxygène dans ledit gaz, de façon à maintenir la vitesse de la réaction d'oxydation constante pendant au moins la première moitié de la durée de ladite réaction.

De préférence, le gaz oxydant utilisé est de l'oxygène. L'utilisation d'oxygène à 99,5 % présente des avantages car elle évite les purges d'azote non consommé pendant les réactions ; ceci permet de diminuer les pertes d'énergie par évaporation de la solution, de simplifier le fonctionnement du réacteur utilisé puisqu'on évite des purges susceptibles de provoquer des fluctuations brutales de pression et de température au sein dudit réacteur et, également, de limiter la pression totale au sein du réacteur ainsi que son volume, ce qui a, bien entendu, une répercussion favorable sur le coût de l'installation.

Selon l'invention, la pression partielle maximum de l'oxygène dans le gaz oxydant en fin de réaction est comprise entre environ 5 et 100 bars. La température à laquelle on effectue la réaction est d'environ 60 °C à environ 140 °C. La durée de ladite réaction est d'environ dix minutes à deux ou trois heures.

Comme on l'a rappelé ci-dessus, on sait que la cinétique de la réaction d'oxydation influe considérablement sur la structure physique du précipité obtenu : en effet, si cette cinétique est non contrôlée, et notamment si la vitesse de formation des ions ferriques est trop rapide surtout au début de la réaction, il y a formation de gels amorphes d'hydroxyde ferrique de la forme $Fe(OH)_n$ — $Fe(OH)_n$ pratiquement impossible à filtrer ; cette formation de gels amorphes se fait, bien entendu, au détriment de la phase cristalline de FeOOH qui est, elle, facilement filtrable. Ce problème est plus particulièrement important dans les conditions de mise en œuvre du procédé objet de la demande, c'est-à-dire que le milieu de départ est un milieu fortement chloré ($[Cl^-] \leqslant 10M$), riche en, cuivre ($[Cu^{++}] \leqslant 1,5M$), concentré en fer ferreux ($[Fe^{++}] \leqslant 2M$) ; or, en présence d'ions $Cl^-$, la proportion entre les deux types de produits susceptibles de se former, à savoir l'akaganéite qui est un précipité cristallin de βFeOOH et le composé amorphe $Fe(OH)_n$ est justement fonction de la cinétique de la réaction d'oxydation.

Compte tenu de ces observations, le demandeur a cherché et déterminé la loi cinétique de la vitesse V de transformation des ions ferreux en ions ferriques qui est la suivante :

$$V = \frac{d[Fe^{+++}]}{dt} = k.[Fe^{++}]^2.[O_2].\exp.[\alpha[Cl^-]] \qquad (1)$$

dans laquelle :

$[Fe^{++}]$ est la concentration en ions ferreux dans la solution,

$[O_2]$ est la concentration en oxygène dissous dans la solution ;

k est la constante cinétique de réaction exprimée en $mole^{-2}l^2s^{-1}$ et répond à la formule $k = ATe\,(-Ea/RT)$ dans laquelle $A = 1\,380\ l^2\ mole^{-2}s^{-1}k^{-1}$

T est la température absolue à laquelle a lieu la réaction (degrés Kelvin), Ea (énergie d'activation de la réaction) = 11 307 calories/mole, et R est la constante des gaz parfaits,

α est un coefficient caractérisant l'activité catalytique des ions chlorures et a la valeur

$$\alpha = \left(2,34 - \frac{1\,120}{RT}\right) l.mole^{-1},$$

$[Cl^-]$ est la concentration en ions chlorures dans la solution.

On voit, d'après l'équation (1), que les ions ferriques ont tendance, au début, à se former très rapidement puisque la solution de départ contient beaucoup d'ions ferreux. Pour éviter ce phénomène, le demandeur a donc cherché à augmenter progressivement, au fur et à mesure de la disparition des ions ferreux, la concentration en oxygène dissous. Pour cela, il a mis au point une façon d'augmenter de façon rigoureusement contrôlée la pression partielle de l'oxygène gazeux injecté dans la solution de lixiviation de façon telle que la vitesse de transformation en ions ferriques des ions ferreux présents dans la solution soit constante pendant au moins la première moitié de la durée de la réaction d'oxydation. En effet, en considérant l'équation (1), si on se fixe un taux de conversion du fer ferreux en fer ferrique donné, on en déduit la quantité d'oxygène dissous nécessaire pour obtenir ce taux de conversion, et, si on se fixe un temps de réaction donné, on en déduit le débit de gaz oxydant nécessaire pour obtenir le taux de conversion préalablement fixé. On voit, d'après l'équation (1), que si l'on veut V à peu près constante, comme la concentration en ions ferreux décroît il faut augmenter la concentration en oxygène dissous, c'est-à-dire augmenter la pression partielle de l'oxygène gazeux introduit dans la solution. Or, le demandeur a mis au point la relation permettant d'augmenter la pression partielle P de l'oxygène gazeux introduit pour obtenir le résultat recherché. Cette relation est la suivante :

$$P = \frac{C'}{k[O_2]_{p=1}\,[Fe^{++}]_0 \left\{C^2 + g_r \frac{C^2}{1-C}\right\}} \qquad (2)$$

dans laquelle :

$$C' = \frac{dC}{dt} \quad \text{et} \quad C = \frac{[Fe^{++}]_t}{[Fe^{++}]_0},$$

$[Fe^{++}]_t$ étant la concentration en fer ferreux totale dans la solution à l'instant t et $[Fe^{++}]_0$ la concentration initiale en fer ferreux dans la solution,

k est la constante cinétique de la réaction,

$[O_2]_{p=1}$ est la concentration en oxygène dissous dans la solution pour une pression en oxygène de 1 bar,

$$g_r = k_r \frac{[Cu^{++}]_0}{[Fe^{++}]_0},$$

$[Cu^{++}]_0$ étant la concentration initiale en cuivre cuivrique dans la solution et $k_r$ étant la constante thermodynamique réduite de la réaction d'oxydation ; $k_r = -6{,}84 + 10{,}3\,[Cl^-]$.

Quand, selon le mode de réalisation préféré de l'invention, le gaz oxydant est constitué par de l'oxygène, la pression partielle P de l'oxygène définie ci-dessus est en fait, bien entendu, la pression de l'oxygène injecté dans le réacteur contenant la solution.

Selon une variante de réalisation préférée de l'invention, on introduit le gaz oxydant (de préférence l'oxygène) à débit constant et on augmente la pression de l'oxygène gazeux de façon continue en fonction du temps selon l'équation (2). On a donc alors une vitesse d'oxydation des ions ferreux en ions ferriques pratiquement constante, tout au long de la réaction.

Selon une autre variante de réalisation du procédé de l'invention, à partir d'un taux de conversion des ions ferreux en ions ferriques d'au moins 50 % (c'est-à-dire une fois qu'au moins la première moitié de la durée de la réaction est effectuée), on augmente le débit d'introduction du gaz oxydant (de préférence l'oxygène), et donc on augmente la vitesse de réaction en fin de procédé.

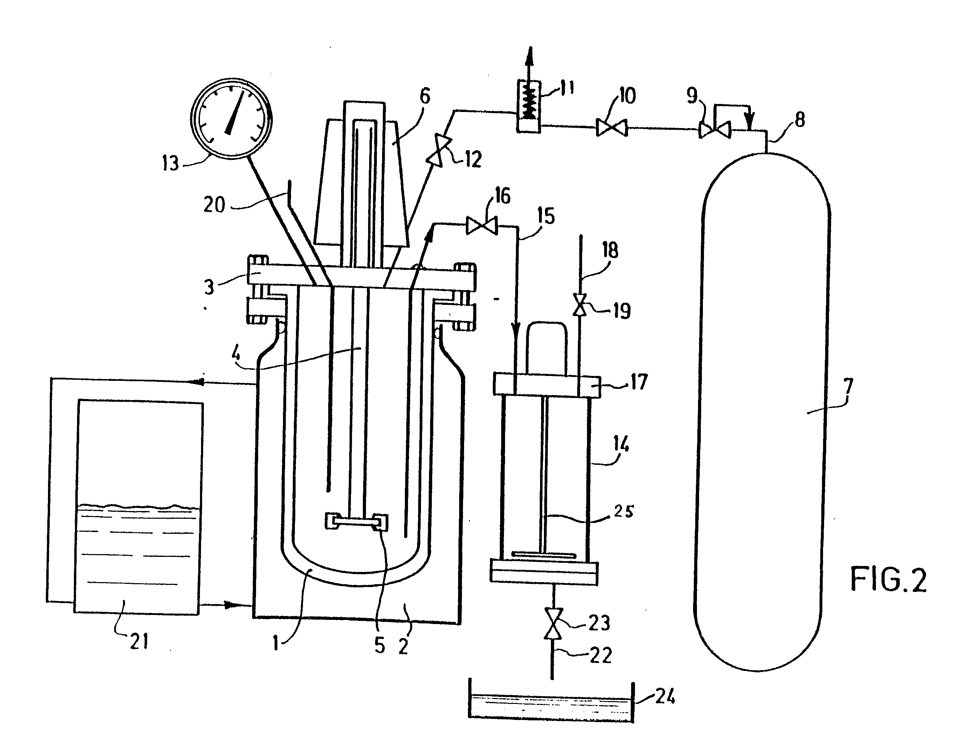

L'invention sera mieux comprise à la lecture de la description qui suit faite en se référant aux figures 1 et 2 sur lesquelles :

la figure 1 représente deux courbes donnant le rapport

$$C = \frac{[Fe^{++}]_t}{[Fe^{++}]_0}$$

en fonction du temps, l'une pour un mode de réalisation (donné à titre d'exemple) du procédé conforme à l'invention, et l'autre pour un mode de réalisation autre que le procédé de l'invention ;

la figure 2 représente schématiquement un mode de réalisation d'un dispositif de mise en œuvre du procédé selon l'invention.

Sur la figure 1, on a représenté la courbe (I) donnant le rapport C en fonction du temps (en minutes), correspondant au traitement d'une solution de lixiviation selon le procédé de l'invention, le gaz oxydant injecté étant de l'oxygène. La solution de lixiviation de départ a la composition suivante :

$FeCl_2$ : 1 $M^{-1}$

$CuCl_2$ : 0,05 $M^{-1}$

NaCl : 0,9 $M^{-1}$

$[Cl^-]_{T_0}$ : 3 $M^{-1}$ — concentration totale en ions $Cl^-$ dans la solution.

$[CL^-]_1$ : 2,12 $M^{-1}$ — concentration en ions libres $Cl^-$ dans la solution.

Le pH de la solution est de 1. La température à laquelle on effectue le traitement est de 80 °C. Le débit d'introduction de l'oxygène est de 12 $cm^3$/sec.

Cette courbe (I) correspond à une augmentation continue de la pression de l'oxygène introduit dans la solution selon l'équation (2) ci-dessus, soit :

| t min.) | 0 | 15 | 30 | 45 | 60 | 75 | 90 | 105 | 120 |
|---|---|---|---|---|---|---|---|---|---|
| P (bars) | | 0,17 | 0,39 | 0,724 | 1 | 2,3 | 4,6 | 11,6 | 55 |
| C | 1 | 0,888 | 0,775 | 0,663 | 0,55 | 0,438 | 0,325 | 0,213 | 0,1 |

La droite (I) montre que, dans cet exemple, la vitesse d'oxydation des ions ferreux est constante tout au long de la réaction.

La courbe (II) de la figure 1 donne le rapport C en fonction du temps, obtenu en traitant une solution de lixiviation identique à celle du traitement correspondant à la courbe (I), à la même température, mais à une pression d'oxygène constante de 5 bars, et en laissant la réaction se poursuivre naturellement, ce qui donne :

| t (min.) | 0 | 3 | 5 | 10 | 15 | 20 | 30 | 45 | 60 | 90 | 120 |
|---|---|---|---|---|---|---|---|---|---|---|---|
| C | 1 | 0,648 | 0,569 | 0,450 | 0,380 | 0,330 | 0,264 | 0,205 | 0,169 | 0,125 | 0,10 |

Comme on le voit, en comparant les deux courbes (I) et (II), le procédé selon l'invention permet d'obtenir une vitesse d'oxydation du fer ferreux en fer ferrique constante alors que, dans le cas de la courbe (II), où la réaction s'effectue à une pression d'oxygène constante, la vitesse d'oxydation est très rapide au début ce qui conduit, comme on l'a expliqué ci-dessus, à la formation préférentielle d'une phase solide amorphe difficilement filtrable.

Sur la figure 2, on a représenté une enceinte réactionnelle composée d'un godet 1, placé dans une double enveloppe 2, et muni d'un couvercle 3. Un agitateur à arbre creux 4, muni à sa partie inférieure d'une turbine 5 autoaspirante à pales, est placé dans le godet 1, traverse le couvercle 3, et est relié à un système d'agitation à entraînement magnétique 6. Un réservoir 7 d'oxygène sous pression communique avec le godet 1 par l'intermédiaire d'un conduit 8 muni, successivement, d'un manomètre détendeur 9, d'une vanne régulatrice de débit 10, d'une soupape de sécurité 11 et d'une deuxième vanne 12. Un manomètre 13 permet de mesurer la pression de l'oxygène dans le godet 1. Une sonde de température en platine 20 plonge dans le godet 1. Le chauffage du godet 1 et de la solution qu'il contient est assuré par la circulation de l'huile issue d'un bain d'huile thermostaté 21. Une cellule de filtration sous pression 14, sur le fond de laquelle est placée une membrane filtrante, est reliée au godet 1 par l'intermédiaire d'un conduit 15, muni d'une vanne 16 traversant le couvercle 3 et plongeant dans le godet 1. La cellule 14 est munie d'un agitateur vibrant 25 et son couvercle 17 est traversé par un conduit d'alimentation en azote 18 muni d'une vanne 19. La cellule 14 est reliée, par l'intermédiaire d'un conduit 22 muni d'une vanne 23, à un bac 24 de récupération de la solution.

La mise en œuvre du procédé de l'invention à l'aide du dispositif décrit ci-dessus s'effectue de la façon suivante : on place la solution de lixiviation dans le godet 1 ; on règle le manomètre détendeur 9 à une pression supérieure à la pression maximum en fin de réaction qui a été préalablement déterminée ; on amène l'oxygène (ou un gaz oxydant) du réservoir 7 dans le godet 1, à un débit constant préalablement déterminé grâce à la vanne 10 (cette détermination du débit a été faite en fonction du taux et du temps de conversion souhaités) ; on surveille la pression de l'oxygène dans le godet 1 grâce au manomètre 13 : au moment où cette pression a atteint la pression maximum que l'on s'est fixée, on coupe l'arrivée d'oxygène en fermant la vanne 10. Cet arrêt de l'introduction d'oxygène peut se faire, soit manuellement, soit automatiquement à l'aide d'un dispositif automatique de type connu. Une fois la réaction terminée, on isole le godet 1 du circuit d'amenée d'oxygène en fermant la vanne 12.

Après refroidissement et dépressurisation du godet 1, on extrait la solution contenant le précipité formé, par le conduit 15 en ouvrant la vanne 16, et on transfère ladite solution dans la cellule 14, tout en maintenant une agitation modérée dans le godet 1 pour maintenir le précipité en suspension dans la solution. Une fois que toute la solution est passée dans la cellule 14, on ferme la vanne 16.

On introduit alors par le conduit 18, en ouvrant la vanne 19, de l'azote sous pression (pouvant aller jusqu'à 10 bars) pour accélérer la filtration tout en maintenant l'agitation au moyen de l'agitateur 25 afin d'éviter que le précipité ne vienne colmater les pores de la membrane de filtration. On récupère la solution débarrassée du précipité dans le bac 24 en ouvrant la vanne 23 du conduit 22.

Une fois la filtration terminée, on introduit par le conduit 18, une solution de lavage légèrement acide et chlorée pour éviter la peptisation du précipité, tout en maintenant l'agitation afin d'obtenir un bon lavage. Ensuite, on injecte à nouveau de l'azote sous pression par le conduit 18 et on filtre. On effectue ainsi trois lavages successifs du précipité.

Enfin, on dévisse la cellule 14 et on récupère le précipité formé sur la membrane placée sur le fond de ladite cellule.

Quand il y a eu attaque hydrométallurgique par du chlorure ferrique, la solution de lixiviation est plus concentrée en fer que la solution d'attaque initiale, en raison de la dissolution partielle ou totale du fer concentré dans le minerai. L'oxydation selon l'invention s'effectue selon la réaction suivante :

$$3FeCl_2 + \frac{3}{4} O_2 + 3HCl \rightleftharpoons 3FeCl_3 + \frac{3}{2} H_2O$$

A partir de ce moment-là, on se place dans des conditions de pH telles que l'on puisse contrôler l'hydrolyse du chlorure ferrique formé et ne laisser précipiter que l'hydroxyde correspondant au fer en excès dans la solution de lixiviation, selon la réaction :

$$FeCl_3 + 2H_2O \rightleftharpoons \underline{FeOOH}\downarrow + 3H^+$$

tandis que le chlorure ferrique nécessaire à la lixiviation est recyclé.

Par contre, lorsque la solution de lixiviation traitée selon l'invention provient d'une attaque hydrométallurgique par le chlorure cuivrique $CuCl_2$, on laisse les réactions d'oxydation et d'hydrolyse se poursuivre jusqu'à la précipitation totale du fer ferrique sous forme d'hydroxyde :

$$3FeCl_2 + \frac{1}{2} O_2 + \frac{1}{2} H_2O \rightleftharpoons \underline{FeOOH}\downarrow + 2FeCl_3$$

$$2FeCl_3 + 4H_2O \rightleftharpoons \underline{2FeOOH}\downarrow + 6H^+$$

et on neutralise les ions $H^+$ ainsi formés par l'oxydation des ions $Cu^+$ présents dans la solution, selon la réaction :

$$H^+ + Cu^+ + \frac{1}{4} O_2 \longrightarrow Cu^{++} + \frac{1}{2} H_2O$$

La description qui précède se rapporte plus particulièrement au traitement de solutions de lixiviation provenant de l'hydrométallurgie du zinc mais, bien entendu, l'invention s'applique au traitement des solutions de lixiviation acides chlorées issues de tout traitement hydrométallurgique de minerais sulfurés complexes pour l'élaboration de métaux non ferreux tel que l'hydrométallurgie du cuivre, du plomb, du cobalt, du nickel, de l'argent, etc... Ces solutions ont en général un pH inférieur à 2,5 et des teneurs en $FeCl_2$ de 0,05 $M^{-1}$ à 2 $M^{-1}$, en $CuCl_2$ de 0,01 $M^{-1}$ à 2 $M^{-1}$, en $ZnCl_2$ de 0,05 $M^{-1}$ à 1 $M^{-1}$, en $PbCl_2$ de 0,005 $M^{-1}$ à 1 $M^{-1}$, en NaCl de 0 à 8 $M^{-1}$, en $[Cl^-]$ To de 1 à 10 $M^{-1}$. Grâce au procédé de l'invention, on peut transformer en précipité de fer ferrique de 10 % à 99 % du fer initialement présent dans ces solutions.

**Revendications**

1. Procédé d'élimination sélective du fer de solutions acides chlorées provenant de la lixiviation de minerais sulfurés complexes en vue de la production de métaux non ferreux, selon lequel on oxyde en fer ferrique le fer ferreux présent dans ladite solution par introduction d'un gaz oxydant dans ladite solution, puis on filtre et lave le précipité de fer ferrique ainsi formé, caractérisé en ce que la solution de départ a une concentration en cuivre $[Cu^{++}] \leq 1,5$ M et une concentration en fer ferreux $[Fe^{++}] \leq 2$ M, et en ce que l'on introduit ledit gaz oxydant dans ladite solution, à débit constant pendant au moins la première moitié de la durée de la réaction, et on augmente, de façon continue, en fonction du temps la pression partielle de l'oxygène dans ledit gaz de façon à maintenir la vitesse de la réaction d'oxydation constante pendant au moins la première moitié de la durée de ladite réaction.

2. Procédé selon la revendication 1, caractérisé en ce que le gaz oxydant est constitué par de l'oxygène.

3. Procédé selon l'une des revendications 1 ou 2, caractérisé en ce que l'on règle l'augmentation continue de la pression partielle P de l'oxygène suivant l'équation :

$$P = \frac{C'}{k[O_2]_{p=1}\,[Fe^{++}]_0 \left\{C^2 + g_r \frac{C^2}{1-C}\right\}} \qquad (2)$$

dans laquelle :

$$C' = \frac{dC}{dt} \text{ et } C = \frac{[Fe^{++}]_t}{[Fe^{++}]_0},$$

$[Fe^{++}]_t$ étant la concentration en fer ferreux total dans la solution à l'instant t et $[Fe^{++}]_0$ la concentration initiale en fer ferreux dans la solution,

k (constante cinétique de réaction exprimée en $mole^{-2}l^2s^{-1}$) = ATe(—Ea/RT) dans laquelle A = 1 380 $l^2$ $mole^{-2}s^{-1}K^{-1}$,

T est la température absolue à laquelle a lieu la réaction (degrés kelvin), Ea (énergie d'activation de la réaction) = 11 307 calories/mole, et R est la constante des gaz parfaits.

$[O_2]_{p=1}$ est la concentration en oxygène dissous dans la solution pour un pression en oxygène de 1 bar

$$g_r = k_r \frac{[Cu^{++}]_0}{[Fe^{++}]_0},$$

$[Cu^{++}]_0$ étant la concentration initiale en cuivre cuivrique dans la solution et $k_r$ (constante thermodynamique réduite de la réaction d'oxydation) = — 6,84 + 10,3 $[Cl^-]$.

4. Procédé selon l'une des revendications 1 à 3, caractérisé en ce qu'on introduit le gaz oxydant à débit constant pendant toute la durée de la réaction.

5. Procédé selon l'une des revendications 1 à 3, caractérisé en ce que, à partir d'un taux de conversion des ions ferreux en ions ferriques d'au moins 50 %, on augmente le débit d'introduction du gaz oxydant.

6. Procédé selon l'une des revendications 1 à 5, caractérisé en ce que la pression partielle maximum de l'oxygène dans le gaz oxydant en fin de réaction est comprise entre environ 5 et 100 bars.

7. Procédé selon l'une des revendications 1 à 6, caractérisé en ce que l'on effectue la réaction d'oxydation du fer ferreux en fer ferrique à une température d'environ 60 °C à environ 140 °C.

8. Procédé selon l'une des revendications 1 à 7, caractérisé en ce que l'on effectue la réaction d'oxydation du fer ferreux en fer ferrique pendant une durée d'environ 10 mn à environ trois heures.

**Claims**

1. Process for removing selectively iron from acidic chlorous solutions originating in leaching complex sulfide ores to produce non-iron metals comprising oxidizing the ferrous iron present in said solution to ferric iron by introduction of an oxidizing gas into said solution and subsequent filtering and washing the so formed precipitate of ferric iron, characterized in that the starting solution has a concentration of copper $[Cu^{++}] \leq 1,5$ M and a concentration of ferrous iron $[Fe^{++}] \leq 2$ M and that one introduces said oxidizing gas into said solution with a constant throughput during at least the first half of the duration of the reaction and one increases continuously the partial pressure of the oxygen in said gas in function of the time to maintain the velocity of the oxidation reaction constant during at least the first half of the duration of said reaction.

2. Process according to claim 1, characterized in that the oxidizing gas consists of oxygen.

3. Process according to one of the claims 1 or 2, characterized in that one regulates the continuous increase of the partial pressure P of the oxygen according to the equation :

$$P = \frac{C'}{k[O_2]_{p=1}\,[Fe^{++}]_0 \left\{C^2 + g_r \frac{C^2}{1-C}\right\}}$$

wherein

$$C' = \frac{dC}{dt} \text{ and } C = \frac{[Fe^{++}]_t}{[Fe^{++}]_0},$$

$[Fe^{++}]_t$ being the total concentration of ferrous iron in the solution at the time t and $[Fe^{++}]_0$ being the initial concentration of ferrous iron in the solution,

k (kinetic constant of reaction expressed as $mole^{-2}l^2s^{-1}$) = ATE(—Ea/RT), wherein A = 1 380 $l^2$ $mole^{-2}s^{-1}k^{-1}$,

T is the absolute temperature at which the reaction is carried out (kelvin degrees), Ea (energy of activation of the reaction) = 11,307 cal/mole, and R is the constant of ideal gases,

$[O_2]_{p=1}$ is the concentration of oxygen dissolved in solution for a pressure of oxygen of 1 bar,

$$5\ g_r = k_r \frac{[Cu^{++}]_0}{[Fe^{++-}]_0},$$

$[Cu^{++}]_0$ being the initial concentration of cupric copper in the solution and $k_r$ (reduced thermodynamic constant of the reaction of oxidation) = $k_r = -6{,}84 + 10{,}3\ [Cl^-]$.

4. Process according to one of the claims 1 to 3, characterized in that one introduces the oxidizing gas with a constant throughput during the entire duraction of the reaction.

5. Process according to one of the claims 1 to 3, characterized in that starting from the rate of conversion of ferrous ions to ferric ions of at least 50 % one increases the throughput of introduction of oxidizing gas.

6. Process according to one of the claims 1 to 5, characterized in that the maximum partial pressure of the oxygen in the oxidizing gas at the end of the reaction is between about 5 and 100 bar.

7. Process according to one of the claims 1 to 6, characterized in that one carries out the reaction of oxidation of ferrous iron to ferric iron at a temperature of about 60 °C to about 140 °C.

8. Process according to one of the claims 1 to 7, characterized in that one carries out the reaction of oxidation of ferrous iron to ferric iron during a duration of about 10 min to about 3 h.

**Patentansprüche**

1. Verfahren zur selektiven Entfernung von Eisen aus sauren chlorhaltigen Lösungen, die aus der Auslaugung komplexer sulfidischer Erze zur Herstellung von Nichteisenmetallen stammen, bei dem man das in der Lösung vorhandene Eisen-II durch Einführung eines oxidierenden Gases in diese Lösung zu Eisen-III oxidiert und den so gebildeten Niederschlag von Eisen-III dann filtriert und wäscht, dadurch gekennzeichnet, daß die Ausgangslösung eine Kupferkonzentration $[Cu^{++}] \leq 1{,}5$ M und eine Eisen-II-Konzentration $[Fe^{++}] \leq 2$ M hat und daß man das oxidierende Gas in die Lösung mit konstantem Durchsatz während wenigstens der ersten Hälfte der Dauer der Reaktion einführt und kontinuierlich in Abhängigkeit von der Zeit den Partialdruck des Sauerstoffs in dem Gas derart erhöht, daß die Geschwindigkeit der Oxidationsreaktion während wenigstens der ersten Hälfte der Dauer dieser Reaktion konstant gehalten wird.

2. Verfahren nach Anspruch 1, dadurch gekennzeichnet, daß das oxidierende Gas aus Sauerstoff besteht.

3. Verfahren nach einem der Ansprüche 1 oder 2, dadurch gekennzeichnet, daß man die kontinuierliche Steigerung des Partialdruckes P des Sauerstoffs nach der Gleichung

$$P = \frac{C'}{k[O_2]_{p=1}\,[Fe^{++}]_0 \left\{ C^2 + g_r \frac{C^2}{1-C} \right\}} \qquad (2)$$

steuert, worin

$$C' = \frac{dC}{dt} \quad \text{und} \quad C = \frac{[Fe^{++}]_t}{[Fe^{++}]_0},$$

wobei $[Fe^{++}]_t$ die Gesamtkonzentration an Eisen-II in der Lösung zum Zeitpunkt t ist und $[Fe^{++}]_0$ die Anfangskonzentration an Eisen-II in der Lösung ist,

k (kinetische Reaktionskonstante ausgedrückt in $Mol^{-2}l^2s^{-1}$) = ATE(—Ea/RT), worin $A = 1\,380\ l^2\ Mol^{-2}s^{-1}K^{-1}$ ist,

T die absolute Temperatur ist, bei der die Reaktion stattfindet (Kelvingrade), Ea (Aktivierungsenergie der Reaktion) = 11,307 Cal/Mol und R die Konstante idealer Gase ist,

$[O_2]_{p=1}$ die Konzentration des in der Lösung gelösten Sauerstoffes für einen Sauerstoffdruck von 1 bar ist,

$$g_r = k_r \frac{[Cu^{++}]_0}{[Fe^{++-}]_0},$$

wobei $[Cu^{++}]_0$ die Anfangskonzentration an Kupfer-II in der Lösung ist und $k_r$ (reduzierte thermodynamische Konstante der Oxidationsreaktion) = $-6{,}84 + 10{,}3\ [Cl^-]$.

4. Verfahren nach einem der Ansprüche 1 bis 3, dadurch gekennzeichnet, daß man das oxidierende Gas mit konstantem Durchsatz während der gesamten Dauer der Reaktion einführt.

5. Verfahren nach einem der Ansprüche 1 bis 3, dadurch gekennzeichnet, daß man ausgehend von einem Umwandlungsgrad der Eisen-II-Ionen in Eisen-III-Ionen von wenigstens 50 % den Durchsatz der Einführung des oxidierenden Gases steigert.

6. Verfahren nach einem der Ansprüche 1 bis 5, dadurch gekennzeichnet, daß der maximale Partialdruck des Sauerstoffs in dem oxidierenden Gas am Ende der Reaktion zwischen etwa 5 und 100 bar liegt.

7. Verfahren nach einem der Ansprüche 1 bis 6, dadurch gekennzeichnet, daß man die Oxidationsreaktion von Eisen-II zu Eisen-III bei einer Temperatur von etwa 60 °C bis etwa 140 °C durchführt.

8. Verfahren nach einem der Ansprüche 1 bis 7, dadurch gekennzeichnet, daß man die Oxidationsreaktion von Eisen-II zu Eisen-III während einer Dauer von etwa 10 min bis zu etwa 3 h durchführt.

FIG.1

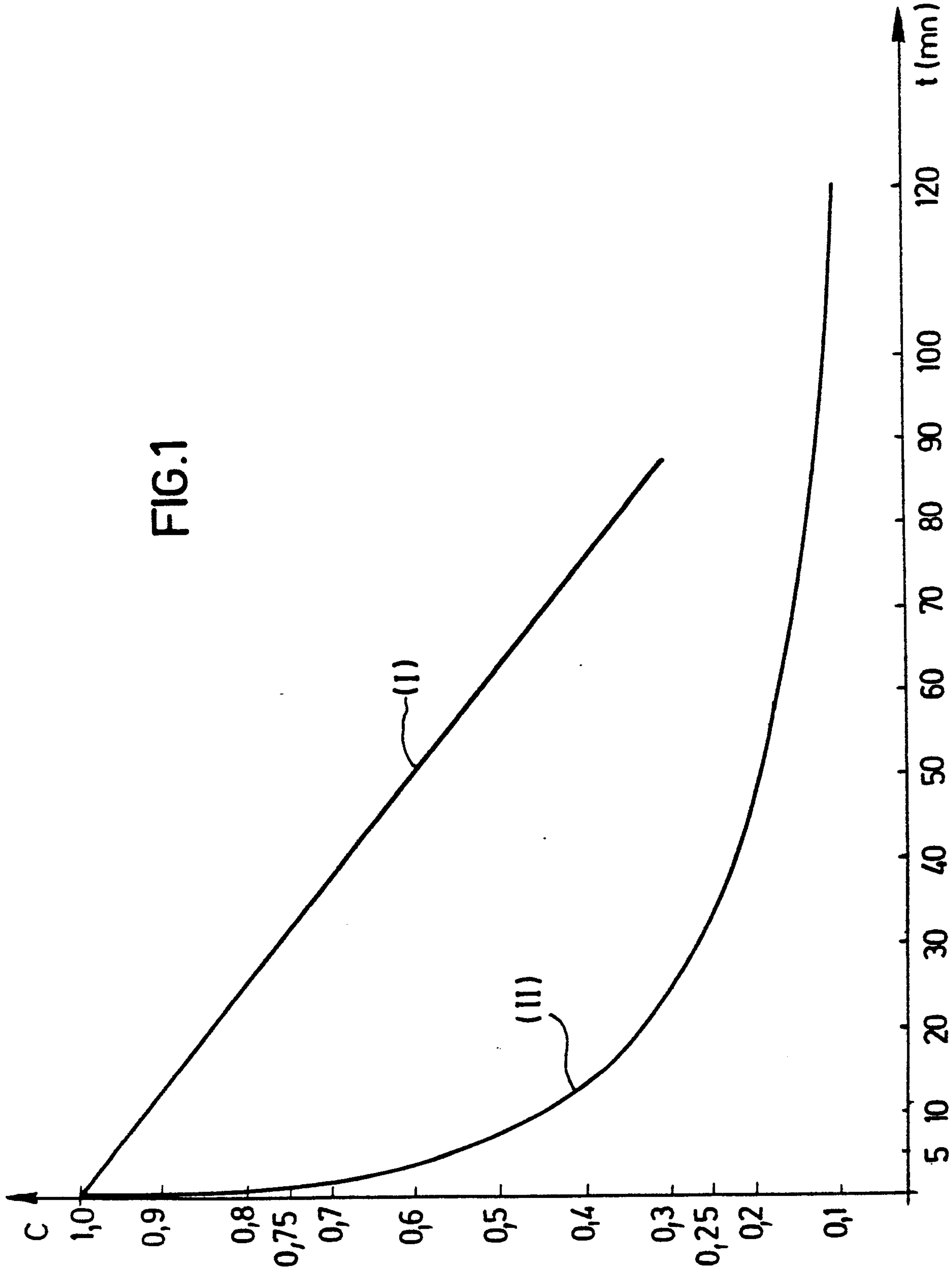
C
1,0
0,9
0,8
0,75
0,7
0,6
0,5
0,4
0,3
0,25
0,2
0,1
5
10
20
30
40
50
60
70
80
90
100
120
t (mn)
(I)
(II)

FIG.2